Europäisches Patentamt

European Patent Office

Office européen des brevets

(11) Publication number: **0 451 609 A2**

# EUROPEAN PATENT APPLICATION

(21) Application number: **91104773.6**

(22) Date of filing: **26.03.91**

(51) Int. Cl.5: **G01N 17/00**

(30) Priority: **27.03.90 JP 80381/90**

(43) Date of publication of application:
**16.10.91 Bulletin 91/42**

(84) Designated Contracting States:
**CH DE FR GB LI**

(71) Applicant: **SUMITOMO CHEMICAL COMPANY, LIMITED**
**5-33, Kitahama 4-chome Chuo-ku**
**Osaka(JP)**

(72) Inventor: **Takahashi, Naohiro**
**1-11-2-207, Sakasedai**
**Takarazuka-shi, Hyogo-ken(JP)**

(74) Representative: **Vossius & Partner**
**Siebertstrasse 4 P.O. Box 86 07 67**
**W-8000 München 86(DE)**

(54) **Vapor phase photodegradation device.**

(57) A vapor phase photodegradation device comprising a thermostatic vessel that houses a reaction vessel therein, whereby the whole body of the reaction vessel is set to a constant temperature when a test substance is heated and vaporized. Accordingly, adhesion of the test substance to the vessel wall is prevented. The reaction vessel which is supported by support straps on a trolley comprising casters is thereby freely movable and the direction of the vessel mouth can be varied by an angle position setting member. Consequently, extraction and recovery operations of test substance remaining in the vessel can be performed safely, easily and with high efficiency.

FIG. 1

The present invention relates to a vapor phase photodegradation device used to investigate the material transformation occurring in chemical components of pesticides etc. present in a vapor state in the atmosphere as a result of a photochemical reaction with sunlight.

In order to evaluate the effect of pesticides etc. on the environment, it is necessary to examine the degradation behavior of pesticides in the atmosphere, that is, the influence of photodegradation. An investigation for testing the extent of this effect is carried out according to guidelines set out by the EPA (Environmental Protection Agency) of the United States of America, in which a test method using a vapor phase photodegradation device is described. The vapor phase photodegradation device is a device for determining the rate of degradation and the degradation products of a test substance. Normally, this is done by using a test substance labelled with $^{14}C$ and detecting the intermediate degradation products and $^{14}CO_2$ that is final degradation product.

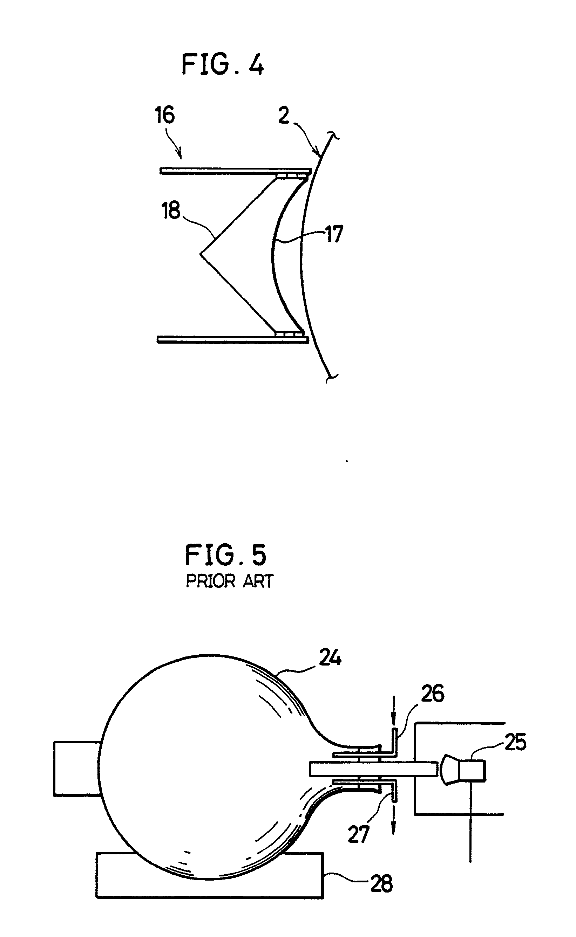

As shown in Fig. 5, the vapor phase photodegradation device is composed of a spherical glass reaction vessel 24, an inlet tube 26 and an outlet tube 27 provided in a mouth section of the reaction vessel 24, a light source 25 that irradiates light into the reaction vessel 24 through the mouth section, a mantle heater 28 for locally and externally heating an outer base section of the reaction vessel 24, etc.

During testing, for example, the test substance is placed in an inner base section of the reaction vessel 24 and the reaction vessel 24 is heated externally using the mantle heater 28. This causes the test substance to be vaporized in the inner section of the reaction vessel 24. The vaporized test substance in the reaction vessel 24 is then irradiated with an artificial light from the light source 25, the wavelength distribution of the artificial light being proximate to the wavelength distribution of sunlight. Thereafter, air free of $CO_2$, the $CO_2$ being previously removed therefrom, is introduced into the inner section of the reaction vessel 24 through the inlet tube 26 and vapor in the reaction vessel 24 is removed using a suction pump, not shown, through the outlet tube 27. The removed vapor is collected by being passed through a collecting device, not shown. The degradation rate of the test substance and components of the degradation product etc. therefrom can be determined by detecting reaction material collected in the collecting device.

However, in the conventional device the reaction vessel 24 is heated only locally by the mantle heater 28 since the mantle heater 28 is located under the outer base section of the reaction vessel 24. That is, only a base section of the reaction vessel 24 is heated, while an upper section and other sections of the reaction vessel 24 are not heated sufficiently. As a result, the temperature of the air within the reaction vessel 24 and the temperature of the surrounding walls of the reaction vessel 24 becomes ununiform. Consequently, the vaporized test substance in the upper section of the reaction vessel 24 cools down and adheres to the inner wall surface of the reaction vessel 24 and a so-called wall reaction occurs on the vessel wall. This results in problems such as the production of desired degradation product according to the vapor phase reaction being prevented.

An object of the present invention is to provide a vapor phase photodegradation device that maintains the vessel wall and the inner section of the reaction vessel at a constant temperature.

Another object of the present invention is to provide a vapor phase photodegradation device where the reaction vessel is easily movable.

A further object of the present invention is to provide a vapor phase photodegradation device that can carry out washing, extracting and recovery operations of the post-reaction test substance in a simple manner.

In order to achieve the above objects, a vapor phase photodegradation device according to the present invention comprises: a spherical reaction vessel; a light source which irradiates a light on a test substance in the reaction vessel; heating means for applying heat to the reaction vessel; and collecting means for collecting the post-reaction test substance. The vapor phase photodegradation device is characterized in that the reaction vessel is disposed in an inner section of a thermostatic chamber of a thermostatic vessel set to a fixed temperature, the thermostatic vessel comprising thermostatic means which includes a heater etc. as the heating means.

According to the above arrangement, a test substance in the reaction vessel is heated and vaporized by the heating means disposed in the thermostatic vessel. The vaporized test substance is then irradiated with a light from the light source. The reaction vessel is heated uniformly from all sides, and the wall and the inner section of the reaction vessel are maintained at a constant temperature since the reaction vessel is disposed in the thermostatic chamber which is set to a fixed temperature. Consequently, adhesion to the vessel wall due to cooling of the vaporized test substance in the reaction vessel no longer takes place, and the occurrence of a wall reaction on the vessel wall can thereby be prevented. As a result, it becomes possible to collect the desired photodegradation material in the collecting means and the photodegradability of the test substance in the vapor phase can be correctly evaluated.

In order to achieve the above objectives, the vapor phase photodegradation device further comprises reaction vessel supporting means including: a trolley which is equipped with casters and includes a rising frame, a pair of arms which extend horizontally from the rising frame, angle position setting means axially attached to the arms, and two support straps that are strapped around the outer surface of the reaction vessel. The support straps mutually intersect and intersecting sections of the support straps are attached to the arms through the angle position setting means.

The reaction vessel supporting means permits the reaction vessel to be easily removed from the thermostatic vessel, and permits the reaction vessel to be easily tilted, thereby permitting extraction, recovery and other operations to be performed safely, easily and with high efficiency.

For a fuller understanding of the nature and advantages of the invention, reference should be made to the ensuing detailed description taken in conjunction with the accompanying drawings.

BRIEF DESCRIPTION OF THE DRAWINGS

Figs. 1 to 4 show one embodiment of the present invention.

Fig. 1 is a schematic view showing the configuration of a vapor phase photodegradation device.

Fig. 2 is a schematic longitudinal sectional view of a thermostatic vessel and a thermostatic means provided therein.

Fig. 3 is a side view of a trolley and a reaction vessel provided thereon.

Fig. 4 is a schematic longitudinal sectional view showing the configuration of a light trap.

Fig. 5 is a schematic view showing essential parts of the configuration of a conventional vapor phase photodegradation device.

DETAILED DESCRIPTION OF THE EMBODIMENTS

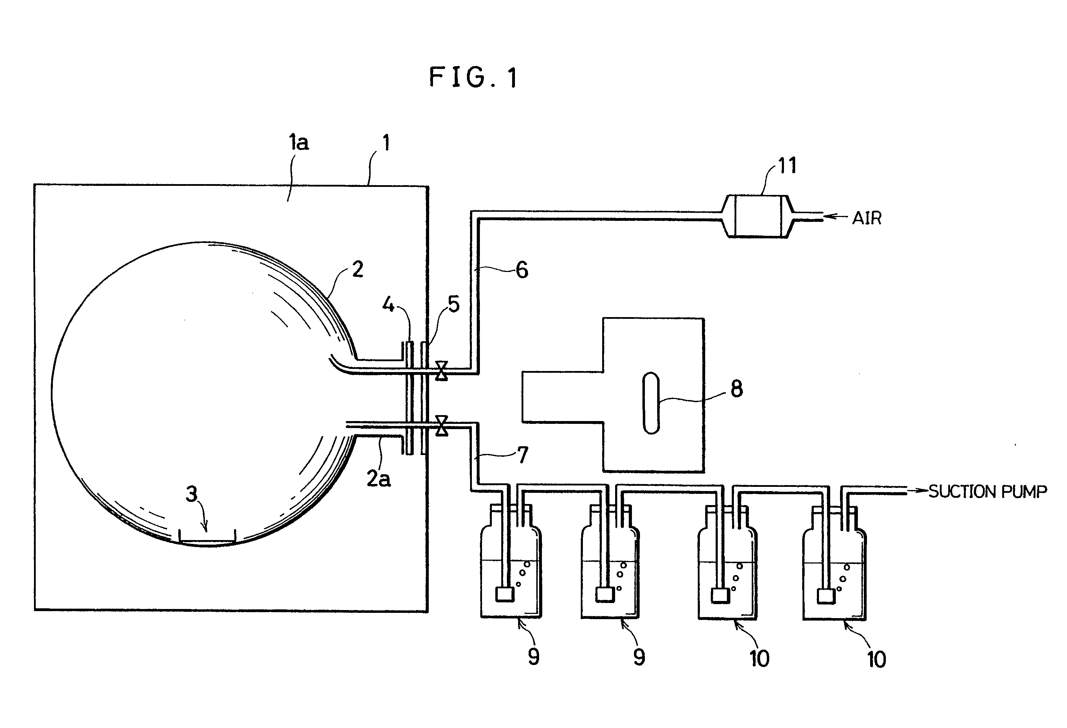

One embodiment of the present invention is described hereinbelow with reference to Figs. 1 to 4.

As shown in Fig. 1, a vapor phase photodegradation device according to the present invention comprises a thermostatic vessel 1. A thermostatic chamber 1a that is formed in an inner section of the thermostatic vessel 1 maintains the walls of the thermostatic vessel and the atmosphere of the inner section at a constant temperature. A spherical reaction vessel 2 is provided in the thermostatic chamber 1a and is movable since the reaction vessel 2 is supported by a rising frame included in a trolley 12 which is equipped with casters 19 (shown in Fig. 3). The reaction vessel 2 can thereby be inserted into and removed from the thermostatic chamber 1a. A transparent lid 4 made of quartz glass is provided on a mouth section 2a of the reaction vessel 2 in order to make the mouth section 2a airtight. Further, a window section 5 made of borosilicate glass is formed on a wall section of the thermostatic vessel 1 opposing to the mouth section 2a of the reaction vessel 2. The window section 5 serves to make the inner section of the thermostatic vessel 1 airtight. Two through ports are provided respectively in an upper part and a lower part of the lid 4 and in an upper part and a lower part of the window section 5. An inlet tube 6 is inserted through the upper through port and an outlet tube 7 is inserted through the lower through port in such a way as to maintain airtightness.

A $CO_2$ removing device 11 having, for example, ascarite is connected to the conduit of the inlet tube 6. Further, two mutually differing trains of collecting devices 9, 9 and collecting devices 10, 10 are connected to the conduit of the output tube 7 as collecting means. Ethylene glycol, for example, is contained in one of the collecting devices 9 in order to collect unchanged material and intermediate degradation products. A 2.5% NaOH solution, for example, is contained in the other of collecting devices 10 in order to collect $^{14}CO_2$, which is a final degradation product.

Further, a xenon lamp 8 and an optical system, not shown, are provided near the thermostatic vessel 1 for irradiating a parallel beam of light through the lid 4 and the window section 5 to the inner section of the reaction vessel 2. The xenon lamp 8 serves as a light source having a wavelength distribution proximate to that of sunlight. The window section 5 also serves as a filter to eliminate light in the short wavelength spectrum included in the light emitted by the xenon lamp 8, thereby approximating the light irradiated into the inner section of the reaction vessel 2 to sunlight.

The reaction vessel 2 has a content volume of 72 liters and is attached to a pair of left and right arms 14, 14 extending horizontally from a rising frame of the trolley 12. That is, support straps 13, 13 are strapped around the outer surface of the reaction vessel 2 so as to mutually intersect, thereby holding the spherical reaction vessel 2 in a stable position. Further, circular-plate shaped angle position setting members 15a, 15a are respectively fixed integrally at intersecting sections of the support straps 13, the intersecting sections forming on both sides of the reaction vessel 2. Axes 15, 15 project outwards from central sections of the angle position setting members 15a and are attached to the arms 14 in a bearing arrangement so as to be rotatively free. Moreover, a plurality of engaging grooves 15b are formed at 15° intervals along the circumferences of the angle position setting members 15a. The angle of incline of the reaction vessel 2 can be freely set at 15° intervals by the operation of a handle section of a fixed mechanism, not shown in Fig. 3. The handle section is provided with an engaging hook which engages with and stops one of the free engaging grooves 15b formed on the angle position setting member 15a.

Further, a light trap 16 is provided at a rear end of the reaction vessel 2, that is, on a side opposing to the mouth section 2a of the reaction vessel 2. As shown in Fig. 4, the light trap 16 is formed by a reflecting mirror 17 having a concave surface integrated back to back with a light absorbing cone 18. An outer surface of the light absorbing cone 18 is painted black and the light absorbing cone 18 is circular cone shaped. The light absorbing cone 18 is arranged so that when the light irradiated on the inner section of the reaction vessel 2 by the xenon lamp 8 reaches the light trap 16, the light does not return to the inner section of the reaction vessel 2 and is released away from it. On the other hand, the reflecting mirror 17 reflects the light irradiated into the inner section of the reaction vessel 2 towards an inner wall surface of the reaction vessel 2. Although the reflecting mirror 17 and light absorbing cone 18 can be made to face the reaction vessel 2 interchangeably as necessary, normally the test is performed with the light absorbing cone 18 facing the inner section of the reaction vessel 2. In the case where the reflecting mirror 17 is made to face the inner section of the reaction vessel 2, data for the case where a wall reaction occurred are obtained and differences with respect to test data corresponding to vapor phase can be determined.

The outer surface of the reaction vessel 2 is painted black, excluding an area where the light trap 16 is provided. The black paint prevents stray light from entering the reaction vessel 2 from outside the reaction vessel 2.

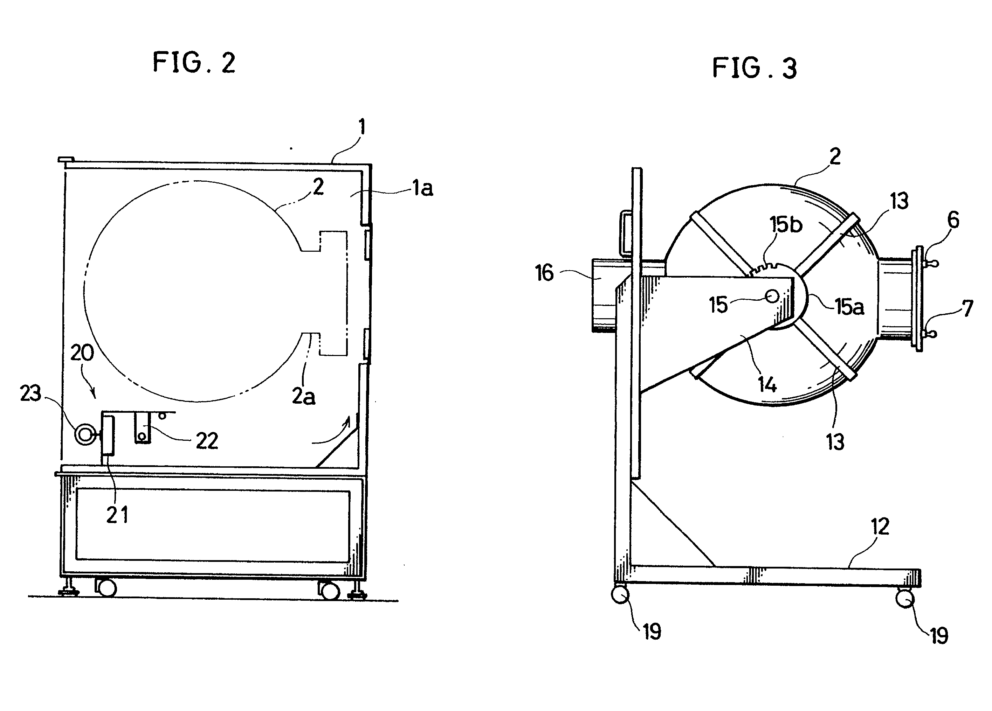

As shown in Fig. 2, thermostatic means 20 is provided in a rear-end lower section of the inner section of the thermostatic vessel 1. The thermostatic means 20 comprises: heating means 22 such as a heater; a fan 21; a temperature sensing element 23; and other members. The thermostatic means 20 controls the heating means 22 comprising the heater etc. so that the heating means 22 is switched ON/OFF by a controlling device, not shown, and by the temperature sensing element 23 that senses the temperature in the thermostatic chamber 1a. The thermostatic means 20 also imposes a forced circulation of air in the thermostatic chamber 1a by means of the fan 21. This is done in order to maintain the thermostatic chamber 1a at a fixed temperature. Using a thermostatic means such as the thermostatic means 20 makes it possible to set the temperature within the thermostatic chamber 1a within an error margin of ±0.1°C.

A test method based on the above configuration using a vapor phase photodegradation device is described hereinbelow.

First, a sample labelled with $^{14}$C is dissolved in a small quantity of an organic solvent and the solution is coated on a Petri dish. The organic solvent is then evaporated and a thin film of the sample remains as a test substance 3. As shown in Fig. 1, the test substance 3 is placed in an inner base section of the reaction vessel 2 and an outer surface of the reaction vessel 2 is uniformly heated by the heating means 22. The test substance 3 is completely vaporized in the reaction vessel 2 due to the uniform heating of the outer surface. Thus the test substance 3 is made to exist in a vapor state in the reaction vessel 2.

After setting the inner section of the thermostatic chamber 1a to a fixed temperature, for example, 30°C, the vaporized test substance 3 is irradiated with light from the xenon lamp 8. The controlling device mentioned earlier controls the xenon lamp 8 so that the light therefrom is irradiated at intervals fixed at hours, days or at cyclic intervals. In this way, the test substance 3 in the vapor state does not adhere to the vessel wall due to cooling since the reaction vessel 2 is disposed in the inner section of the thermostatic chamber 1a and the thermostatic means 20 maintains the temperature of the whole body of the vessel at 30°C within an error margin of ±0.1°C.

Any undegraded test substance and degradation products that are present while the test is in progress or that remain after the test has been completed are collected in the collecting devices 9 and the collecting devices 10. This is done by removing the vapor in the reaction vessel 2 through the outlet tube 7 by means of a suction pump, not shown, allowing the vapor to pass through the collecting devices 9, 10. After collection has taken place, the degradation products etc. dissolved in the ethylene glycol contained in the collecting devices 9 and the degradation products etc. dissolved in the 2.5% NaOH solution contained in the collecting devices 10 are detected by a predetermined detection operation. Replacement of air in the reaction vessel 2 while the test is in progress is carried out through the inlet tube 6, $CO_2$ being removed from the air entering the reaction vessel 2 by the $CO_2$ removing device 11.

On the other hand, after the test has been completed, the test substance, degradation products etc. remaining in the reaction vessel 2 are removed therefrom as described hereinbelow. As shown in Fig. 3, the reaction vessel 2 together with the trolley 12 are taken out from the thermostatic chamber 1a and kept for 1-2 hours in a low temperature chamber (approximately 4° C). In this case too, stray light cannot enter the vessel since the outer surface of the reaction vessel 2 is painted black. Further, material to be recovered is not lost in the atmosphere even if the lid 4 is removed after the test has been completed. This is because the remaining test substance, degradation products etc. are removed after the vaporized material has adhered to the vessel wall of the reaction vessel 2 which is being maintained at a low temperature.

Next, the handle section is operated, as described earlier, to rotate and set the reaction vessel 2 so that the mouth section 2a thereof is positioned facing upwards. Then, an extraction solvent such as ethyl acetate is poured on the inner wall surface of the reaction vessel 2 and the vessel wall is flushed thereby. Thereafter, the reaction vessel 2 is rotated so that it returns to its original horizontal position by operating the handle section once again. Following this, the extraction solvent in the reaction vessel 2 is removed by a suction pump, not shown, and the extraction solvent is transferred to another vessel.

After having repeated the above operation several times, a detection operation is carried out with respect to the extraction solvent collected thereby. Further, in the case where the test substance 3 etc. adhering to the mouth section 2a of the reaction vessel 2 is to be flushed, the reaction vessel 2 is made to face diagonally downwards and the extraction solvent is sprayed from a washing bottle on the mouth section 2a of the reaction vessel 2. The detection operation is then likewise carried out with respect to the extraction solvent that is drained and collected from the mouth section 2a thereof.

As described above, it becomes possible to carry out washing and recovery operations inside the low temperature chamber since the reaction vessel 2 can be freely inserted into and removed from the thermostatic chamber 1a of the thermostatic vessel 1 and the reaction vessel 2 can thereby be moved to the low temperature chamber. Consequently, it becomes possible to greatly increase the recovery rate of the material to be recovered. Furthermore, unlike the conventional example shown in Fig. 5, it is no longer necessary to hold the reaction vessel 24 in the hand when the washing and extraction operations of the test substance are performed, since the reaction vessel 2 is supported by the trolley 12 so as to be freely rotatable. As a result, the washing operation of the reaction vessel 2 and the extraction and recovery operations of the test substance remaining in the vessel 2 can be performed safely, easily and with high efficiency.

Further, although the $CO_2$ removing device 11 has been described as containing ascarite, any type of substance that is capable of removing $CO_2$, for example a 2.5% NaOH solution instead of ascarite, may be used. The material contained in the collecting device 9 may equally well be, for example, polyurethane, a trapping resin (Amberlite XAD 2, XAD 4 etc.) as long as it is capable of collecting the material to be recovered. Also, the substance contained in the collecting device 10 may be of any type or composition as long as it is capable of absorbing $^{14}CO_2$.

The light source need not necessarily be a xenon lamp. For example, a low pressure mercury lamp having a filter or an RS sunlamp (General Electronics Co.) or other lamp may equally be used.

The invention being thus described, it may be obvious that the same may be varied in many ways. Such variations are not to be regarded as a departure from the scope of the invention.

There are described above novel features which the skilled man will appreciate give rise to advantages. These are each independent aspects of the invention to be covered by the present application, irrespective of whether or not they are included within the scope of the following claims.

## Claims

1. A vapor phase photodegradation device comprising:

   a spherical reaction vessel having a mouth section for inserting and removing test substance;

   a light source which irradiates light on the test substance in the reaction vessel;

   a thermostatic vessel which houses the spherical reaction vessel;

   thermostatic means, disposed in the thermostatic vessel, which includes heating means for heating the reaction vessel; and

   collecting means for collecting post-reaction test substance,

   wherein an inner section of the thermostatic vessel is kept at a fixed temperature by the thermostatic means.

2. A vapor phase photodegradation device as set forth in claim 1, further comprising:

   a trolley which is equipped with casters and includes a rising frame;

   a pair of arms which extend horizontally from the rising frame;

   angle position setting means axially attached to the arms; and

   reaction vessel supporting means which comprises two support straps that are strapped around an outer surface of the reaction vessel, intersecting sections of the support straps being attached to the arms through the angle position setting means.

3. A vapor phase photodegradation device as set forth in claim 2, wherein the angle position setting means are angle position setting members having a plurality of engaging grooves that are formed at fixed intervals along the circumferences of the angle position setting members.

4. A vapor phase photodegradation device as set forth in claim 1, 2 or 3, wherein the thermostatic means comprises:

a fan which imposes a forced circulation of air in the thermostatic vessel;

the heating means for heating the reaction vessel up to a fixed temperature and for heating the inner section of the thermostatic vessel to a fixed temperature; and

a temperature sensing element which senses the temperature of the inner section of the thermostatic vessel.

5. A vapor phase photodegradation device as set forth in any one of claims 1 to 4, further comprising:

a light trap provided on a surface of the reaction vessel opposing to the mouth section of the reaction vessel,

wherein the light trap consists of a reflecting mirror having a concave surface integrated back to back with a light absorbing cone painted black and having a circular cone shape.

6. A vapor phase photodegradation device as set forth in claim 5, wherein an outer surface of the reaction vessel is painted black, excluding an area of the outer surface whereon the light trap is disposed.

7. A vapor phase photodegradation device as set forth in any one of claims 1 to 6, further comprising:

an inlet tube, having a $CO_2$ removing device, which supplies air into the reaction vessel through the $CO_2$ removing device.

8. A vapor phase photodegradation device as set forth in any one of claims 1 to 7, the thermostatic vessel comprising a window section composed of borosilicate glass disposed in a wall section of the thermostatic vessel opposing to the mouth section of the reaction vessel,

wherein the window section has a filtering function of approximating the light irradiated from the light source to sunlight.

9. A vapor phase photodegradation device as set forth in any one of claims 1 to 8, the collecting means comprising:

a first collecting device which contains ethylene glycol, polyurethane or a trapping resin; and

a second collecting device which contains an NaOH solution.

10. A vapor phase photodegradation device as set forth in any one of claims 1 to 9, wherein the light source is a xenon lamp which produces light having a wavelength distribution proximate to the wavelength distribution of sunlight.

# FIG. 1

EP 0 451 609 A2

# FIG. 2

# FIG. 3

# FIG. 4

# FIG. 5
PRIOR ART